# EUROPEAN PATENT APPLICATION

(11) **EP 4 462 715 A1**
(43) Date of publication of application: **13.11.2024**
(21) Application number: 24174798.9
(22) Date of filing: 08.05.2024
(51) Int. Cl.: H04L 5/00, H04W 80/12, H04W 84/12

(54) **ENHANCED RANGING TECHNIQUES IN 802.11**

(30) Priority: 12.05.2023 US 202363502018 P; 01.05.2024 US 202418652108
(71) Applicant: Apple Inc., Cupertino, CA 95014 (US)
(72) Inventor: WU, Tianyu, Fremont (US); BATRA, Anuj, Redwood City (US); LEE, Wook Bong, San Jose (US); WANG, Qi, Sunnyvale (US)
(74) Representative: COPA Copenhagen Patents

(57) **Abstract**

A method of an initiating station (ISTA) can include transmitting, to a responding station (RSTA), a first indicator indicating whether the ISTA supports one or more optional preamble puncture patterns. Additionally, the method can include receiving, from the RSTA, a second indicator indicating whether the RSTA supports optional preamble puncture patterns. Furthermore and responsive to determining that the ISTA and the RSTA support optional preamble puncture patterns, the method can further include starting, according to at least one of the optional preamble puncture patterns, a ranging session with the RSTA.

## Description

### FIELD

The present application relates to wireless communications, including techniques for wireless communication among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modem WLANs are based on the Institute of Electrical and Electronics Engineers (IEEE) 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MI,O that are not acting as APs can be referred to as non-AP MLDs. Improvements in the field are desired.

### SUMMARY

Embodiments described herein relate to systems, methods, apparatuses, and mechanisms for enhanced ranging techniques in wireless networking systems.

In some embodiments, a method of an initiating station (ISTA) can include transmitting, to a responding station (RSTA), a first indicator indicating whether the ISTA supports one or more optional preamble puncture patterns. Additionally, the method can include receiving, from the RSTA, a second indicator indicating whether the RSTA supports optional preamble puncture patterns. Furthermore and responsive to determining that the ISTA and the RSTA support optional preamble puncture patterns, the method can further include starting, according to at least one of the optional preamble puncture patterns, a ranging session with the RSTA.

In some embodiments, at least one of the first indicator or the second indicator can be indicated using at least one of a first field value or a second field value of a puncturing pattern support field of a ranging sub-element. Furthermore, the puncturing pattern support field of the ranging sub-element can comprise a reserved bit to indicate whether the ISTA supports all optional preamble puncture patterns.

Additionally or alternatively, at least one of the first indicator or the second indicator can be indicated using a field value of a format and bandwidth subfield associated with a ranging parameters field format. According to some embodiments, the format and bandwidth subfield can comprise a reserved field value to indicate whether the ISTA supports extremely high-throughput (EHT) using optional preamble puncture patterns. In some embodiments, the ISTA and the RSTA can also support a static puncture pattern.

In some embodiments, the method can further include receiving, from the RSTA, one or more trigger frames (TFs) transmitting, to the RSTA, one or more ISTA to RSTA (I2R) null data packets (NDPs). Additionally or alternatively, the method can include receiving, from the RSTA, one or more RSTA to ISTA (R2I) ranging null data packet announcement (NDPA) frames and receiving, from the RSTA, one or more R2I NDPs.

According to further embodiments, a processor can be configured to cause an initiating station (ISTA) to transmit, to a responding station (RSTA), a first indicator indicating that the ISTA supports a first set of one or more preamble puncture patterns. Additionally, the processor can be further configured to cause the ISTA to receive, from the RSTA, a second indicator indicating that the second RSTA supports a second set of the one or more preamble puncture patterns. Furthermore, the processor can be further configured to cause the ISTA to, responsive to determining which of the first set and the second set is associated with a smaller number of supported preamble puncture patterns, start, in accordance with one of the one or more preamble puncture patterns associated with the smaller number of supported preamble puncture patterns, a ranging session with the RSTA.

In some embodiments, at least one of the first indicator or the second indicator is indicated using at least one of a first field value or a second field value of a puncturing pattern support field of a ranging sub-element. Additionally or alternatively, at least one of the first field value or the second field value can indicate that at least one of the ISTA or the RSTA supports all optional preamble puncture patterns or at least one of the ISTA or the RSTA supports a subset of all optional preamble puncture patterns.

According to some embodiments, the ISTA and RSTA can support a static puncture pattern in addition to supporting one or more sets of preamble puncture patterns. Furthermore, the at least one processor can be further configured to cause the ISTA to perform, based on the supported static puncture pattern being non-continuous, a fallback procedure to a legacy mode associated with using a maximum available bandwidth for ranging. In some embodiments, the static puncture pattern can have a continuous spectrum.

In some embodiments, at least one of the first indicator or the second indicator can be indicated using one or two field values in a format and bandwidth subfield of a ranging parameters field format. Additionally or alternatively, a first field value of the one or two field values can indicate support of one or more continuous dynamic puncture patterns associated with bandwidths greater than 160MHz. Furthermore, a second field value of the one or two field values can indicate support of all optional preamble puncture patterns.

According to other embodiments, an initiating station (ISTA) can include a radio and a processor operably coupled to the radio and configured to cause the ISTA to transmit, to a responding station (RSTA), a first indicator indicating that the ISTA supports a first set of one or more first preamble puncture patterns. Additionally or alternatively, the processor operably coupled to the radio can be further configured to cause the ISTA to receive, from the RSTA, a second indicator indicating that the RSTA supports a second set of one or more second preamble puncture patterns. Furthermore, at least one of the first indicator or the second indicator can include a first bit indicating support of dynamic puncture patterns associated with a maximum bandwidth and a second bit indicating support of non-continuous puncture patterns. The processor operably coupled to the radio can be further configured to cause the ISTA to, responsive to determining a negotiated set of preamble puncture patterns based on at least one of the first indicator or the second indicator, start, according to at least one of the one or more preamble puncture patterns of the negotiated set of preamble puncture patterns, a ranging session with the RSTA. Furthermore, the negotiated set of preamble puncture patterns can include one or more preamble puncture patterns supported by both the ISTA and RSTA
In some embodiments, the first bit and the second bit are associated with a puncturing pattern support field of a ranging sub-element. Additionally or alternatively, the processor operably coupled to the radio can be further configured to cause the I STA to combine the first bit and the second bit of the first indicator to determine a first capability of ISTA and combine the first bit and the second bit of the second indicator to determine a second capability of the RSTA. In some embodiments, the first bit and second bit can be included in an optional preamble puncture pattern support subfield.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7 and 8 illustrate example aspects of a trigger based (TB) ranging procedure (e.g., a ranging session) performed between an ISTA and an RSTA, according to some embodiments.
Figures 9A-B illustrate example aspects of a non-trigger based (non-TB) ranging procedure (e.g., a ranging session) performed between an ISTA and an RSTA, according to some embodiments.
Figure 10A illustrates an example of an extremely high throughput (EHT) Operation Information field format, according to some embodiments.
Figure 10B illustrates an example 16-bit bitmap of a puncture pattern for 320MHz ranging, according to some embodiments.
Figure 11 illustrates various puncture patterns for a 320MHz PPDU, according to some embodiments.
Figures 12A-C illustrate example aspects of a method of starting a ranging session based on ISTAs and RSTAs supporting or not supporting all optional preamble puncture patterns, according to some embodiments.
Figures 13A-E illustrate example aspects of a method of starting a ranging session for ISTAs and/or RTSAs supporting continuous dynamic puncture patterns or all optional preamble puncture patterns, according to some embodiments.
Figures 14A-C illustrate example aspects of a method of starting a ranging session for ISTAs/RSTAs indicating separate support of dynamic and non-continuous puncture patterns, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**MLD:** Multi-link Device
**LAN:** Local Area Network
**WLAN:** Wireless LAN
**RAT:** Radio Access Technology
**MAC:** Media Access Control
**BSS:** Basic Service Set
**SSID:** Service Set Identifier
**SAP:** Service Access Point
**PPDU:** Physical Protocol Data Unit
**TWT:** Target Wake Time
**NDP:** Null Data Packet
**STS:** Space Time Streams
**LTF:** Long Training Field
**CCFS:** Channel Center Frequency Segment
**EHT:** Extremely High Throughput
**STA:** Station
**ISTA:** Initiating Station
**RSTA:** Receiving Station
**LMR:** Location Measurement Report
**AOA:** Angle of Arrival
**R2I:** RSTA to ISTA
**I2R:** ISTA to RSTA
**LO:** Local Oscillator
**RF:** Radio Frequency
**HE:** High Efficiency

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.
**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category when they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.
**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.
**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.
**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

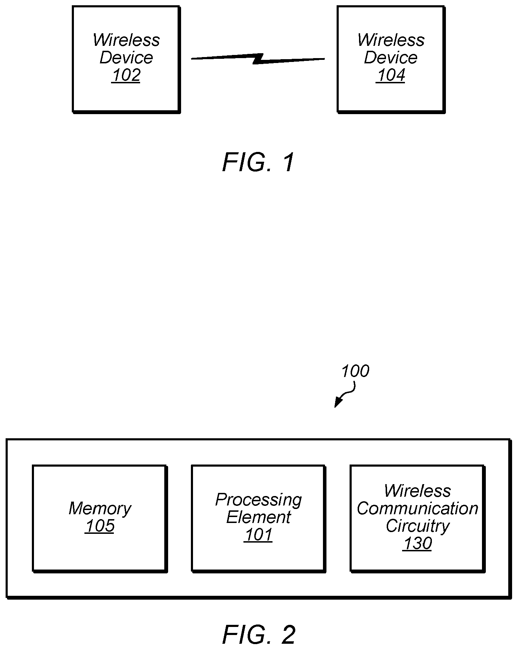

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE, and/or 5G NR, and separate radios for communicating using each of Wi-Fi, UWB, and Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

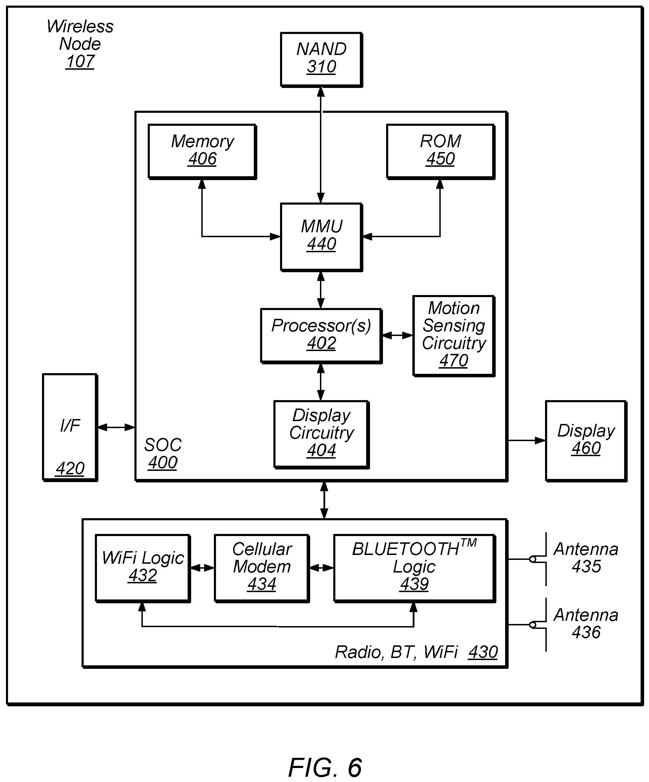

Figure 6 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an `application processor' whose primary function can be to support application layer operations in the device 100, while the wireless communication circuitry 130 can be a `baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

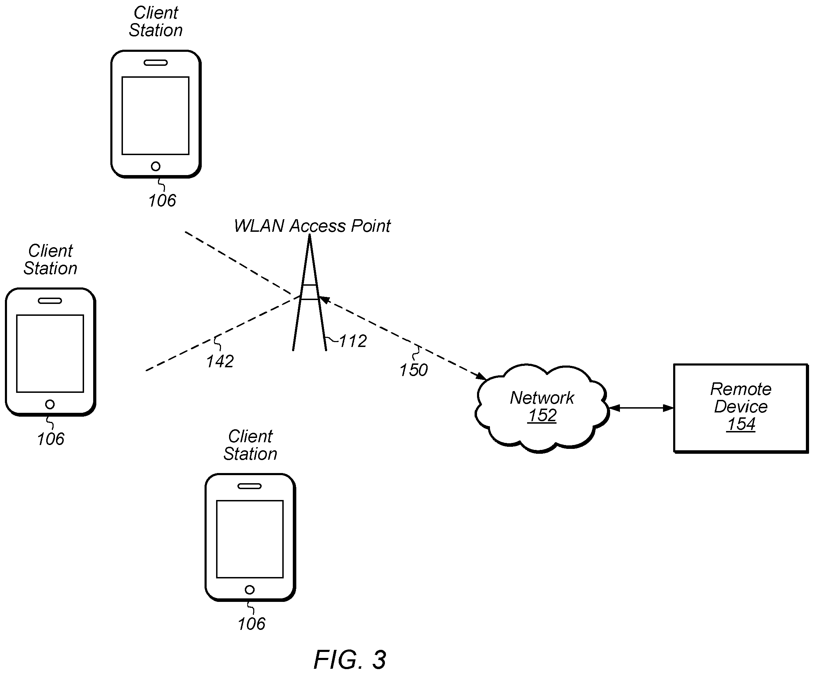

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

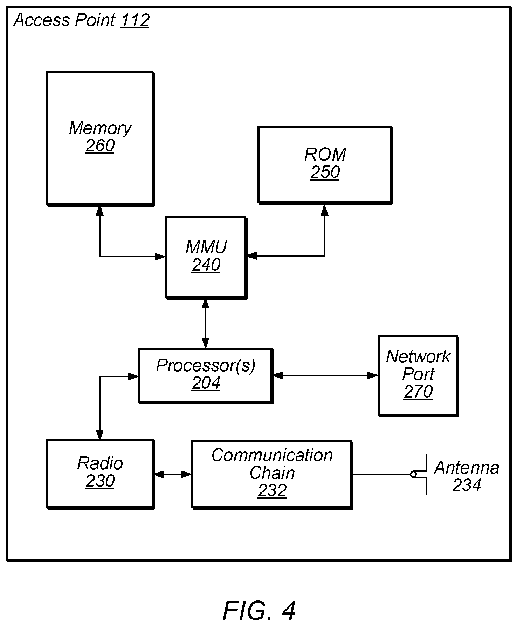

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), and/or 5G NR, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

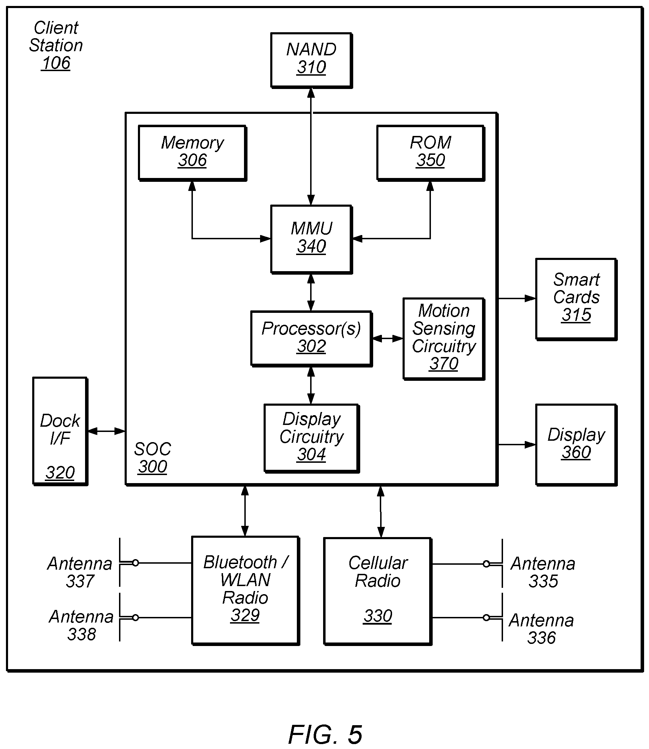

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320, 329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, Bluetooth, Wi-Fi, NFC, GPS, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

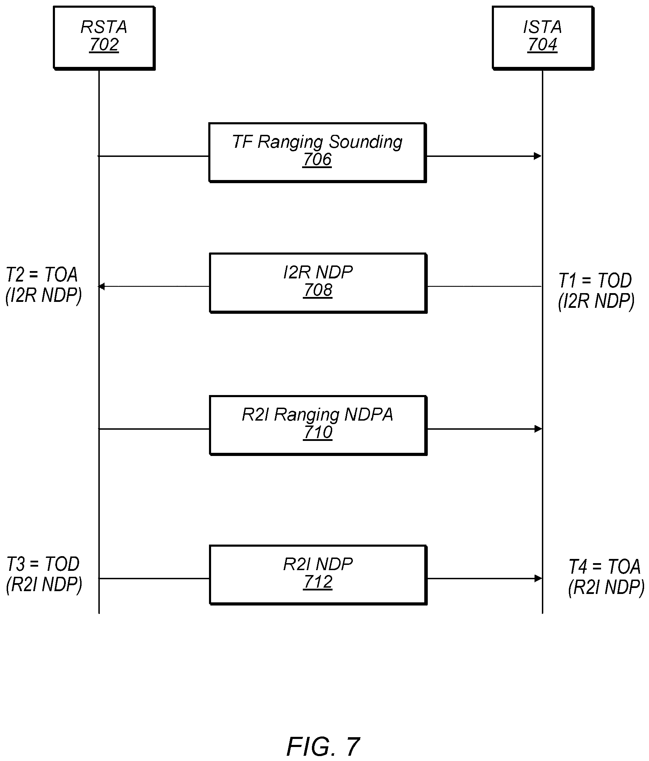

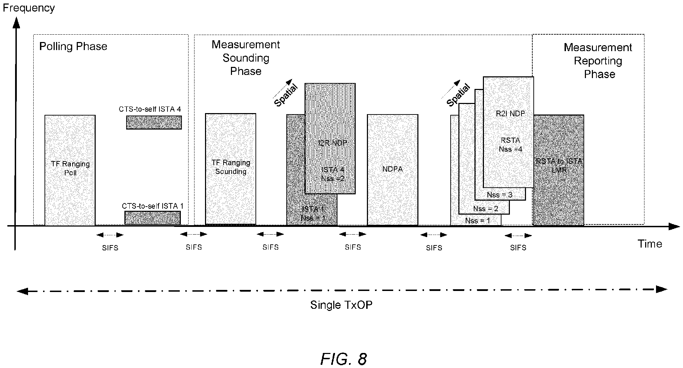

### Figures 7 and 8 - Trigger Based (TB) Ranging Procedure

Figures 7 and 8 illustrate example aspects of ranging procedure (e.g., ranging session) performed between an ISTA and an RSTA, according to some embodiments. More specifically, Figure 7 illustrates a communication flow diagram of an example 802.11az (as one example) trigger based ranging procedure or session which can provide ranging data of the RSTA (e.g., RSTA 702) and/or ISTA (e.g., ISTA 704). In other words, the distance between the ISTA 704 and RSTA 702 can be determined according to the method of Figure 7. Additionally, Figure 8 illustrates an available ranging window with two ISTAs, according to some embodiments.

According to some embodiments, a single trigger frame (TF) can trigger concurrent initiating station (ISTA) to responding station (RSTA) (I2R) null data packets (NDPs) from multiple ISTAs. Figure 7 illustrates a timing diagram of a measurement sounding section in a TB ranging procedure or session between RSTA 702 and ISTA 704. At 706, the RSTA 702 can transmit a TF Ranging Sounding to the ISTA 704. For example, as part of the TB ranging procedure (e.g., ranging session), the RSTA 702 can be able to trigger the ISTA 704 to provide one or more NDPs.

Accordingly, at 708, the ISTA 704 can transmit, at time T1 (e.g., associated with a time of departure (TOD) T1) an I2R NDP to the RSTA 702, according to some embodiments. The RSTA 702 can receive the I2R NDP at T2 (e.g., associated with a time of arrival (TOA) T2).

At 710, the RSTA 702 can proceed to transmit a R2I Ranging null data packet announcement (NDPA) to the ISTA 704, according to some embodiments. Furthermore, at 712 the RSTA 702 can transmit, at time T3 (e.g., associated with a TOD T3), an R2I NDP which can be received at the ISTA 704 at time T4 (e.g., associated with a TOA T4), according to some embodiments.

In some embodiments, the NDPA frame can identify intended recipients and the format of the forthcoming (e.g., subsequent) sounding frame (e.g., R2I NDP of 712). In other words, the NDPA of 710 is followed by the sounding NDP in 712. More specifically, the NDPA can identify which stations should listen to the subsequent sounding frame (e.g., R2I NDP 712) along with the dimensions of that frame depending on the number of antennas and spatial streams in use. Additionally, the sounding frame (R2I NDP 712) itself is a null data packet. However, the preamble of the NDP can include long training fields (LTFs) can be used for ranging purposes.

In other words, Figure 7 illustrates a trigger based ranging procedure (e.g., ranging session) in which an exchange of I2R NDP and R2I NDP can allow for the STAs to calculate (using the timestamps of the associated TODs and TOAs of the sent and received NDPs) a distance between the RSTA 702 and ISTA 704, respectively. For example, the STAs can be able to estimate the distance in the first exchange by multiplying the speed of light by the corresponding Round Trip Time (RTT).

Figure 8 illustrates aspects of the method of Figure 7 including a trigger based available window of two ISTAs, according to some embodiments. More specifically, Figure 8 illustrates a polling phase, a measurement sounding phase, and a measurement reporting phase of a single transmission opportunity (TxOP), according to some embodiments.

In the polling phase, a trigger frame (TF) ranging poll can be followed by separate instances (e.g., separated in frequency) of clear to send (CTS) frames such as CTS-to-self ISTA 4 and CTS-to-self ISTA1, according to some embodiments. According to some embodiments, CTS can be optionally used by 802.11 wireless networking devices as part of a protocol to reduce frame collisions introduced by the hidden node problem. Additionally, the CTS-to-self instances can be separated by a short interframe spacing (SIFS).

Following the CTS frames of the polling phase, a TF ranging sounding can be transmitted as part of a measurement sounding phase (after a SIFS), according to some embodiments. Additionally, following another SIFS, an I2RNDP associated with ISTA 4 and a number of spatial streams (Nss 2) can be transmitted to the RSTA and an I2R NDP associated with ISTA 1 and Nss 1 can be transmitted to the RSTA.

Subsequently, after another SIFS, the ISTAs can receive a NDPA from the RSTA followed by (after a SIFS) four instances of R2I NDPs from the RSTA and associated with Nss 1-4. Additionally, as part of a measurement reporting phase, the ISTAs can receive one or more location measurement reports (LMRs) from the RSTA, according to some embodiments.

According to some embodiments related to IEEE 802.11 releases, such as 802.11az, the NDP used in the ranging session illustrated by Figures 7-8 can be an high efficiency (HE) Ranging NDP.

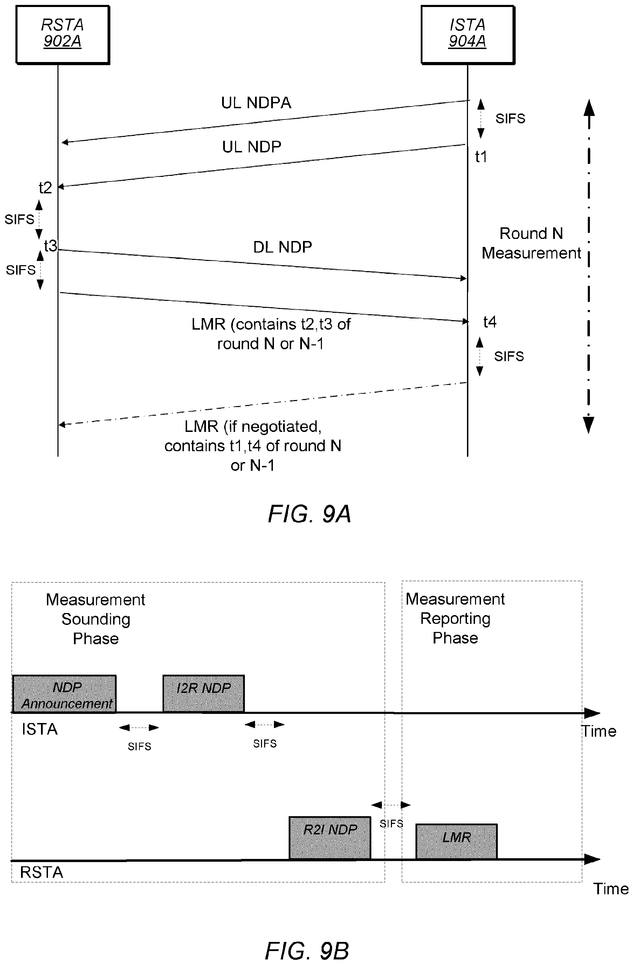

### Figures 9A-B - Non-Trigger Based Ranging Procedure

Figures 9A-B illustrate aspects of an example method of a non-trigger based (non-TB) ranging procedure (e.g., ranging session) performed between an ISTA and an RSTA, according to some embodiments. More specifically, Figure 9A is a communication flow diagram illustrating an example IEEE 802.11 release (such as 802.1 1bk as one example) non-trigger based ranging measurement sequence which can provide ranging data of the RSTA (e.g., RSTA 902A) and/or ISTA (e.g., ISTA 904A). In other words, the distance between the ISTA 904A and RSTA 902A can be determined according to the method of Figure 9A. Additionally, Figure 9B illustrates a non-TB ranging measurement exchange sequence associated with the procedure or session illustrated by Figure 9A, according to some embodiments.

For example, Figure 9A illustrates ISTA 904A transmitting an uplink (UL) NDPA followed by a UL NDP(separated by a SIPS) at time t1 to RSTA 902A, according to some embodiments. The UL NDP can be received by the RSTA 902A at time t2 and at time t3 the RSTA 902A can transmit a downlink NDP to ISTA 904A. Additionally, and after a SIFs, the RSTA 902A can transmit a LMR to the ISTA 904A which can be received (e.g., by the ISTA 904A) at time t4. In some embodiments, the LMR can include information related to t2 (e.g., TOD, TOA, etc.) and t3 and can further be associated with round N or round N-1 measurements. Furthermore, after a SIFS (e.g., after t4), the ISTA 904A can transmit one or more LMRs to RSTA 902A. For example, when negotiation of parameters (e.g., preamble puncture pattern support parameters, as one example) were agreed upon (e.g., both ISTA and RSTA support the agreed parameters), the ISTA 904A can transmit an LMR to the RSTA 902A. Additionally, the LMR can include timing information related to t1 and t4 and further associated with round N or round N-1 measurements.

According to some embodiments, Figure 9A illustrates a non-TB ranging procedure between an AP (e.g., RSTA 902A) and a STA (e.g., ISTA 904A). Additionally, the protocol for performing the procedure as illustrated by Figure 9A can be unscheduled, according to some embodiments. For example, when a transmitting medium is idle, the ISTA can transmit UL NDPA and UL NDP to the RSTA. Accordingly and when available, the RSTA can reply with a DL NDP within a specified time (e.g., after a SIFS has elapsed) as well as a LMR (also after a SIFS).

Figure 9B illustrates the measurement sounding phase and measurement reporting phase associated with the procedure illustrated in Figure 9A, according to some embodiments. For example, in the measurement sounding phase, the ISTA can transmit an NDPA and, after a SIFS, transmit an I2R NDP to the RSTA. Accordingly, after another SIFS, the RSTA can transmit an R2I NDP to the ISTA. Furthermore, as part of the measurement reporting phase, the RSTA can, after a SIFS subsequent to transmitting the R2I NDP, transmit an LMR to the ISTA, according to some embodiments.

According to some embodiments related to IEEE 802.11 releases (such as 802.11bk as one example), the NDP used in the ranging session illustrated by Figures 9A-B can be an extremely high throughput (EHT) Ranging NDP.

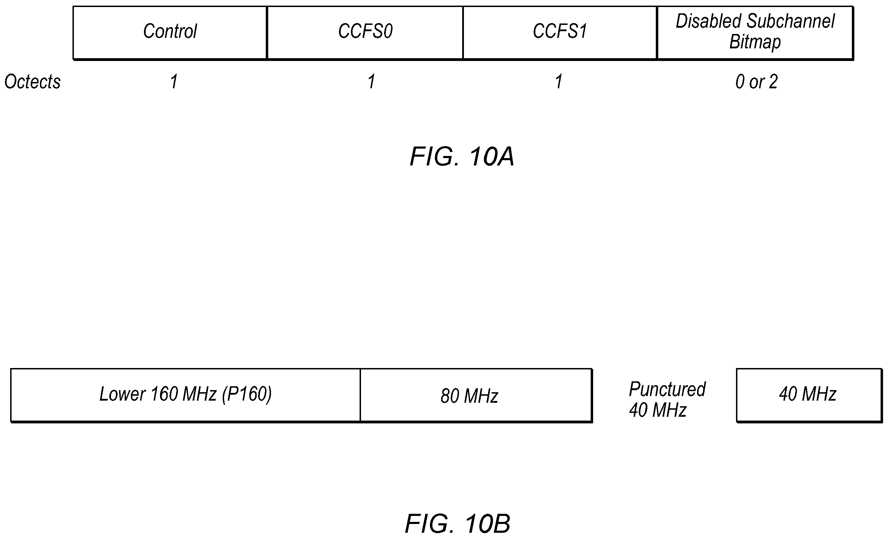

### Figures 10A and 10B - Puncture Patterns Signaled in Beacons

Figures 10A and 10B illustrate example aspects of beacons used to signal puncture patterns, according to some embodiments. Static and dynamic puncturing can offer improvements to ranging accuracy between ISTAs and RTSAs. For example, puncture patterns signaled in beacons (e.g., periodically transmitted signals with information about the transmitting device) can be referred to as static puncturing patterns and are supported in IEEE 802.11 releases (such as 802.11be as one example) data transmissions. More specifically, 16-bit bitmaps in beacons can be used to signal or indicate disabled sub channels. Accordingly, the indicated or signaled subchannels can be punctured in the basic service set (BSS). Puncture patterns other than the static puncture pattern can be referred to as dynamic puncture patterns (e.g., dynamic preamble puncture patterns) in the BSS. Support of said dynamic puncture patterns can be considered as optional in data transmission.

Figure 10A illustrates an example of an extremely high throughput (EHT) Operation Information field format, according to some embodiments. More specifically, Figure 10A illustrates the various fields and respective number of octets associated with each field. For example, the EHT Operation Information field format can include a Control field, a Channel Center Frequency Segment (CCFS) field "CCFS0", and a "CCFS1" field each associated with a respective octet. Additionally, the EHT Operation Information field format can include a Disabled Subchannel Bitmap associated with zero or two octets, according to some embodiments. At least in some instances, the disabled subchannel bitmap can be used to indicate which subchannels are disabled. For example, the disabled subchannel bitmap can be used to indicate puncture patterns across a spectrum. More specifically, the disabled subchannel bitmap can utilize bit values to indicate portions or subchannels of a spectrum which are disabled (e.g., punctured). Accordingly, portions of the bandwidth can be considered continuous (e.g., no punctures/disabled subchannels over the portion) while other portions of the bandwidth can be considered to be discontinuous as they include skipped or punctured (e.g., disabled) portions or subchannels. Therefore, puncture patterns (or portions of puncture patterns) can be characterized as continuous or non-continuous based on how enabled and disabled subchannels are located or represented in the associated bandwidth.

For example, Figure 10B illustrates an example 16-bit bitmap of a puncture pattern for 320MHz ranging, according to some embodiments. As discussed above in regard to Figure 10A, the 16-bit bitmap can be part of a EHT Operation Information field format which can be signaled in one or more beacons. Each bit of the 16-bit bitmap can be mapped to a 20MHz sub channel, according to some embodiments. Furthermore, a bit set to a value of one can indicate that the corresponding or associated 20MHz sub channel is disabled in the BSS. Accordingly, this subchannel can be considered to be punctured.

More specifically, Figure 10B illustrates the 16-bit Disabled Subchannel Bitmap 0000 0000 0000 1100 which can indicate the static puncture pattern shown in Figure 10B. For example, for a ranging operation involving a 320MHz PPDU, the lower (e.g., left) half of the PPDU can correspond to 160MHz (e.g., P160). Accordingly, for the upper (e.g., right) 160MHz half, this can include a portion of 40MHz which the bitmap 0000 0000 0000 1100 indicates as disabled or punctured. More specifically, the "1100" portion of the bitmap can indicate that the first two 20MHz subchannels of the last (e.g., right most) 80MHz of the PPDU are disabled/punctured, according to some embodiments.

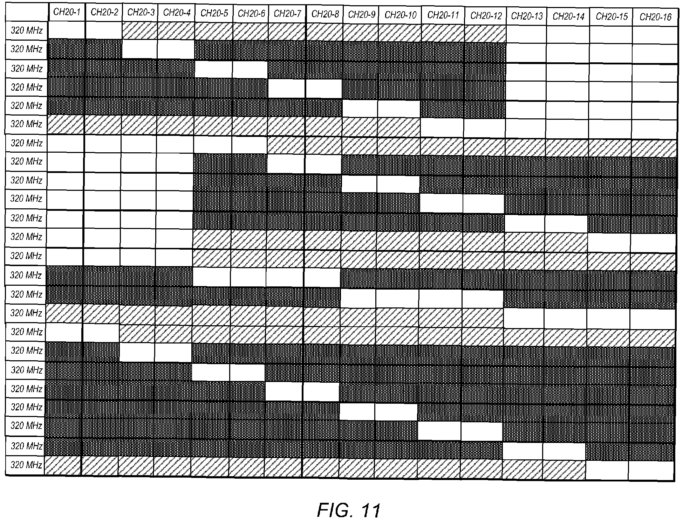

### Figure 11 - 320MHz PPDU Puncture Patterns

Figure 11 illustrates various puncture patterns for a 320MHz PPDU, according to some embodiments. More specifically, Figure 11 illustrates 24 optional puncture patterns (e.g., optional preamble puncture patterns) for 320MHz PPDUs which can be used in ranging procedure negotiations between ISTAs and RSTAs.

According to some embodiments, optional preamble puncture patterns can be characterized as non-mandatory. Alternatively, mandatory puncture patterns can be characterized as puncture patterns that are supported by all relevant devices. In other words, optional preamble puncture patterns can be characterized as puncture patterns that can or can not be supported in a device. Additionally or alternatively, the support of optional preamble puncture patterns can be indicated in capability field or negotiated in a ranging parameters field.

In some embodiments, static puncture patterns can be characterized as preamble puncture pattern signaled in beacons with disabled sub channels. Additionally and according to some embodiments, static puncture patterns can be characterized as mandatory and supported in IEEE 802.11 releases (such as 802.11be as one example). However, in other IEEE 802.11 releases such as 802.1 1bk, it can be beneficial to characterized non-continuous static puncture patterns as optional (e.g., non-mandatory), according to some embodiments.

For example, Figure 11 illustrates a grid of a 320MHz channel (e.g., CH20) and the sixteen subchannels (e.g., CH20-1 ... CH20-16) that comprise the channel. Accordingly, the 24 puncture patterns including disabled subchannels and continuous or non-continuous portions of enabled subchannels are illustrated. The 24 puncture patterns (e.g., preamble puncture patterns) can include sections or segments of punctured (e.g., disabled) subchannels which are illustrated by the blank (e.g., white) blocks, segments of enabled (e.g., non-punctured) subchannels which are illustrated by the darkened blocks, and sections of continuous enabled subchannels which are illustrated by the blocks with diagonal lines or hash marks. Additionally, the sections of subchannels illustrated by the diagonal lines/hash marks (e.g., the enabled blocks) further highlight continuous portions of enabled subchannels spanning at least 200MHz. For example and according to some embodiments, some ISTAs or RTAs can negotiate the use of puncture patterns (e.g., preamble puncture patterns) so long as they include a continuous and enabled section (e.g., subchannels) of spectrum spanning at least 200MHz. In other words, these eight puncture patterns result in a continuous spectrum (e.g., 200 MHz of the 320MHz) as indicated by the diagonal hash marks. Accordingly, these eight puncture patterns can be considered as continuous puncture patterns (e.g., continuous preamble puncture patterns) and the other puncture patterns (e.g., the other sixteen patterns not including the portions of diagonal hash marked subchannels) can be considered as non-continuous puncture patterns (e.g., non-continuous preamble puncture patterns), according to some embodiments.

### Enhanced Ranging Techniques in 802.11

In recent 802.11 developments, improvements regarding ranging accuracy have been discussed. For example, in IEEE 802.11 releases such as 802.11bk, a 320MHz null data packet (NDP) has been introduced to be used in ranging procedures along with a 320MHz physical protocol data unit (PPDU) which has been introduced in IEEE 802.11 release 802.11be (as long as a number of preamble puncture patterns have been defined for 320MHz transmission).

In some embodiments, a preamble of the PPDU can be characterized as the PPDU physical (PHY) header and can further be mandatory in all PPDUs. For example, each PPDU can start with a preamble (which could be different for different generations of WiFi/802.11) and is followed by data field. Accordingly, a preamble puncture can be associated with one or more 20MHz sub channels which are punctured. Therefore, data can not be transmitted on the punctured sub channels of the preamble puncture.

In some scenarios, preamble puncturing can be utilized to improve spectrum utilization for data traffic when some of the sub-channels are not available in a wireless local area network (WLAN) channel. For example, preamble puncture patterns can be beneficial such that the subchannels that are not available in a WLAN are punctured or disabled. This disabling (e.g., puncturing) of subchannels can in turn result in power savings or power conservation due to the ISTA and RSTA avoiding transmission/reception in these subchannels. However, some of the preamble puncture patterns can be part of a discontinuous spectrum while typical ranging algorithms can assume a continuous spectrum. Unlike data traffic, supporting discontinuous preamble puncture patterns can not benefit ranging accuracy, according to some scenarios. Additionally, during most ranging measurement scenarios, there should optimally be no change of the puncture pattern which is being utilized for said measurement.

Therefore, it can be beneficial to provide support for static preamble puncture patterns and dynamic preamble puncture patterns for 320 MHz ranging. For example, one option can be to support all static (e.g., unchanging) preamble puncture patterns that result in a continuous spectrum (e.g., static and continuous puncture patterns) and optionally support other puncture patterns. Additionally or alternatively, it can be beneficial to categorize the optional preamble puncture patterns into multiple sets and signaling separately.

For example, using bitmaps such as the 16-bit bitmap illustrated in Figure 10B, it can be possible to indicate two levels of optional preamble puncture pattern support. In some embodiments, the bitmap can be used to indicate support of only continuous dynamic preamble puncture patterns with bandwidths greater than 160 MHz including a primary channel. Additionally or alternatively, the bitmap can be used to indicate support of all optional preamble puncture patterns.

Furthermore, the ISTA and RSTA can negotiate support of optional preamble puncture patterns in a ranging parameter field. For example, when an optional preamble puncture pattern is indicated as supported in a ranging parameters field by both an ISTA and an RSTA (e.g., 802.11bk ISTA/RSTA), a ranging NDP can use the optional preamble puncture pattern. Alternatively, when an optional preamble puncture pattern is not supported by either the ISTA or RSTA (e.g., 802.11bk ISTA/RSTA) a ranging NDP can not be capable of using the optional preamble puncture pattern. Accordingly, different modifications to the ranging parameters field can be necessary to support multiple solutions for categorizing optional preamble puncture patterns.

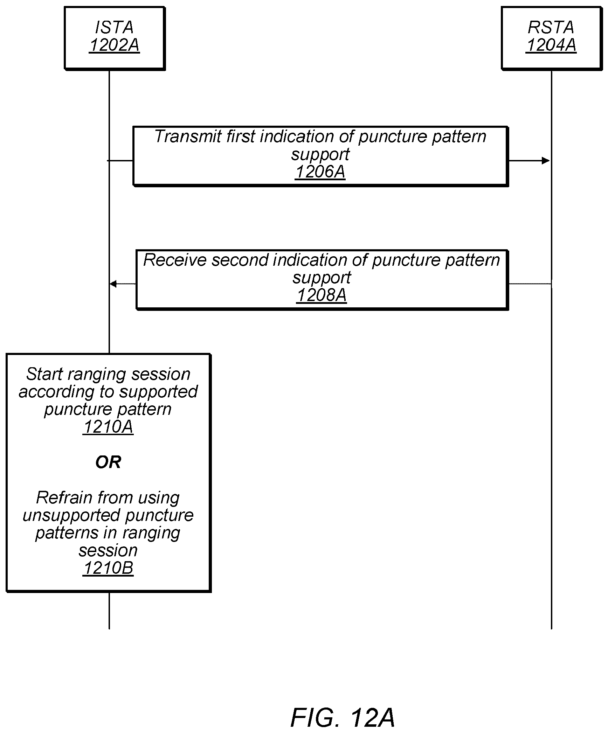

### Figures 12A-C - Method of Starting Ranging Session based on ISTAs and RSTAs Supporting or Not Supporting All Optional Preamble Puncture Patterns

Figure 12A is a communication flow diagram illustrating example aspects of a method of starting a ranging session based on initiating stations (ISTAs) and responding stations (RSTAs) supporting or not supporting all optional preamble puncture patterns, according to some embodiments.

Aspects of the method of Figure 12A can be implemented by a first STA (e.g., ISTA) in communication with another STA (e.g., RSTA). The STAs (e.g., ISTA and RSTA) can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA (e.g., ISTA and/or RSTA), UE, non-AP MLD, and/or non-AP STA or other device to perform such method elements.

Note that while at least some elements of the method of Figure 12A are described in a manner relating to the use of communication techniques and/or features associated with IEEE and/or 802.11 (e.g., 802.11bk as one example) specification documents, such description is not intended to be limiting to the disclosure, and aspects of the method of Figure 12A can be used in any suitable wireless communication system, as desired. Similarly, while elements of the method of Figure 12A are described in a manner relating to STAs, such description is not intended to be limiting to the disclosure, and aspects of the method of Figure 12A can be used by STAs that are or are not multi-link devices (MLDs), as desired. Moreover, aspects of the method of Figure 12A can be used by STAs that are APs (e.g., AP or otherwise), as desired. For example, an ISTA can be a non-AP and an RSTA can be an AP, or vice versa, etc. In other words, ISTAs and/or RSTAs can be AP STAs or non-AP STAs.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1206A, the ISTA 1202A can transmit a first indicator indicating puncture pattern support, according to some embodiments. More specifically, in 1206A the ISTA 1202A (e.g., a first STA) can transmit, to a second STA (e.g., RSTA 1204A), a first indicator indicating whether the ISTA 1202A supports all optional preamble puncture patterns (e.g., all 24 patterns as illustrated in Figure 11, for example). However, according to some embodiments relating to the static puncture pattern being a continuous puncture pattern, then there would accordingly be 23 optional preamble puncture patterns.

In 1208A, the ISTA 1202A can receive a second indicator of puncture pattern support, according to some embodiments. More specifically, in 1208A, the ISTA 1202A can receive, from the RSTA 1204A, a second indicator indicating whether the RSTA 1204A supports optional preamble puncture patterns.

In some embodiments, at least one of the first indicator or the second indicator can be indicated using (e.g., can be) a reserved bit of a ranging parameters field format. Additionally or alternatively, at least one of the first indicator or the second indicator can be indicated using a field value in a format and bandwidth subfield of the ranging parameters field format. According to some embodiments, the ISTA 1202A and RSTA 1204A can support a static puncture pattern in addition to supporting or not supporting additional optional preamble puncture patterns. In some embodiments, at least one of the first indicator or the second indicator can be indicated using a puncturing pattern support field in a 320MHz ranging sub-element. For example, a puncturing pattern support field can be set to a value of "1" (e.g., one) to indicate support of all puncturing patterns, according to some embodiments. Alternatively, a puncturing pattern support field can be set to a value of "0" (e.g., zero) to indicate support of only a subset of puncturing patterns defined in a table corresponding to RU or MRU indexes. For example, for a PPDU bandwidth of 320MHz and a 80MHz puncturing scenario, the table can specify puncturing patterns corresponding to RU or MRU indexes such as [x x 1 1 1 1 1 1] for a 3x996-tone MRU 1 or [1 1 1 1 1 1 x x] for a 3x996-tone MRU 4, according to some embodiments. In other words, at least one of the first indicator or the second indicator can be indicated using at least one of a first field value or a second field value of a puncturing pattern support field of a ranging sub-element.

In 1210A, the ISTA 1202A can start a ranging session with the RSTA 904, according to some embodiments. For example, the ISTA 1202A can start a ranging session with the RSTA 904 according to one or more of the ranging procedures or sessions described in Figures 7-9. More specifically, when the STAs (e.g., ISTA 1202A and RSTA 1204A) both support optional preamble puncture patterns, the ISTA 1202A can start, according to at least one of the optional preamble puncture patterns, a ranging session (e.g., as illustrated by one or more of the ranging sessions described in Figures 7-9).

Alternatively, in 1210B, when at least one of the STAs (e.g., ISTA 1202A and/or RSTA 1204A) does not support optional preamble puncture patterns, the method can further include refraining from starting a ranging session (that uses at least one of the optional preamble puncture patterns) with the RSTA 1204A. In some embodiments, the ISTA 1202A can further perform, based on at least one of STAs not supporting optional preamble puncture patterns and the supported static puncture pattern not being continuous for at least 160MHz, a fallback procedure to a legacy mode associated with using a largest available primary channel for ranging.

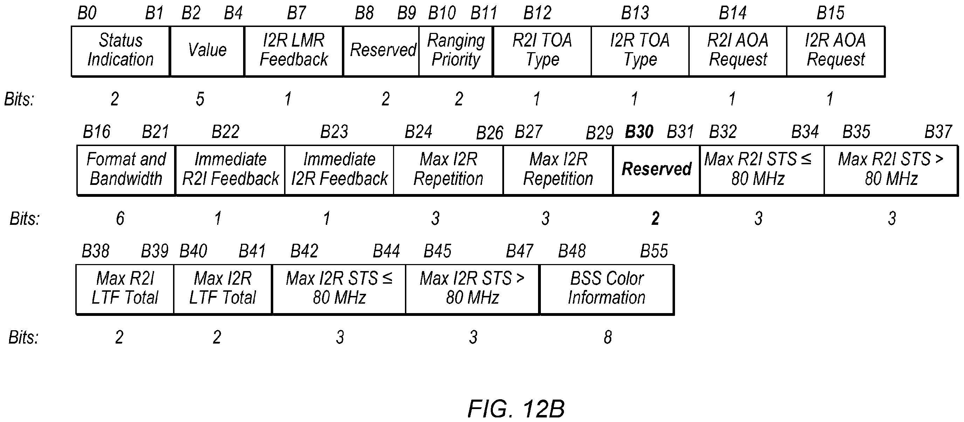

Figure 12B illustrates an example of a Ranging Parameters field format, according to some embodiments. More specifically, Figure 12B illustrates the number of bits (and their respective numbering) for different fields of a ranging parameters field format which can be used as part of the method described and illustrated by Figure 12A.

For example, a ranging parameters field format can include a status indication field associated with two bits (e.g., B0-B1), a value field associated with five bits (e.g., B2-B6), an ISTA to RSTA (I2R) Location Measurement Report (LMR) Feedback field associated with one bit (e.g., B7), a first reserved field associated with two bits (e.g., B8-B9), a ranging priority field associated with two bits (e.g., B10-B11), an R2I time of arrival (TOA) Type field associated with one bit (e.g., B12), an I2R time of arrival (TOA) Type field associated with one bit (e.g., B13), an R2I angle of arrival (AOA) Request field associated with one bit (e.g., B14), an I2R angle of arrival (AOA) Request field associated with one bit (e.g., B15), a Format and Bandwidth field associated with six bits (e.g., B16-B21), an Immediate R2I Feedback field associated with one bit (e.g., B22), an Immediate I2R Feedback field associated with one bit (e.g., B23), a maximum (Max) I2R Repetition field associated with three bits (e.g., B24-B26), a Max R2I Repetition field associated with three bits (e.g., B27-B29), a second reserved field associated with two bits (e.g., B30-B31), a Max R2I space time streams (STS) ≤ 80 MHz field associated with three bits (e.g., B32-B34) which can indicate a maximum number of space time streams supported in the specified bandwidth, a Max R2I STS > 80 MHz field associated with three bits (e.g., B35-B37), a Max R2I long training field (LTF) Total field associated with two bits (e.g., B38-B39), a Max I2R LTF Total field associated with two bits (e.g., B40-B41), a Max I2R STS ≤ 80 MHz field associated with three bits (e.g., B42-B44), a Max I2R STS > 80 MHz field associated with three bits (e.g., B45-B47), and a BSS Color Information field associated with eight bits (e.g., B48-B55), according to some embodiments.

In some embodiments, it can be possible to use a reserved bit to indicate support or lack of support (e.g., supporting none) of all optional preamble puncture patterns. For example, redefining bit B30 (e.g., as illustrated in the second reserved field of the ranging parameters field format of Figure 12B) as an optional preamble puncture pattern support subfield can allow for specific indications regarding support or supporting none of any optional preamble puncture patterns. More specifically, by setting B30 to a value of one (e.g., "1"), this can indicate that the ISTA 1202A and/or RSTA 1204A supports all optional preamble puncture patterns, according to some embodiments. Alternatively, by setting B30 to a value of zero (e.g., "0"), this can indicate that the ISTA 1202A and/or RSTA 1204A does not support optional preamble puncture patterns, according to some embodiments.

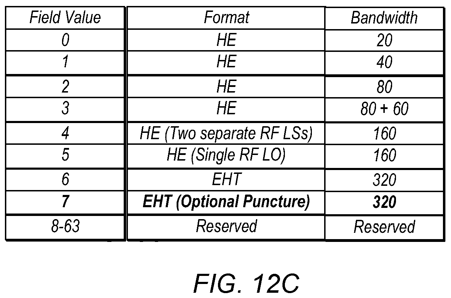

Figure 12C illustrates an example Format and Bandwidth subfield (e.g., associated with six bits B16-B21) of a ranging parameters field format (e.g., as illustrated in Figure 12B), according to some embodiments. More specifically, Figure 12C illustrates Field Values and their associated Formats and Bandwidths of the Format and Bandwidth Subfield of the Ranging Parameters field.

In some embodiments, another signaling option can be to use a reserved value in the Format and Bandwidth subfield. More specifically, by using a reserved field value associated with bits B16-B21 (e.g., as illustrated in the ranging parameters field format of Figure 12B) of the Format and Bandwidth field, an ISTA 1202A and/or RSTA 1204Acan be able to indicate that it supports EHT 320MHz with optional preamble puncture patterns.

According to some embodiments, the Format and Bandwidth field value 0 can be associated with a high efficiency (HE) format and a bandwidth of 20 MHz, the Format and Bandwidth field value 1 can be associated with a HE format and a bandwidth of 40 MHz, the Format and Bandwidth field value 2 can be associated with a HE format and a bandwidth of 80 MHz, the Format and Bandwidth field value 3 can be associated with a HE format and a bandwidth of 80 + 80 MHz, the Format and Bandwidth field value 4 can be associated with a HE format (and further two separate radio frequency (RF) local oscillators (LOs) and a bandwidth of 160 MHz, the Format and Bandwidth field value 5 can be associated with a HE format (and further a single RF LO) and a bandwidth of 160 MHz, the Format and Bandwidth field value 6 can be associated with a EHT format and a bandwidth of 320 MHz, and the Format and Bandwidth field values of 8-63 can be associated with a reserved format and bandwidth, according to some embodiments.

However, the Format and Bandwidth field value of seven (e.g., "7") can be used to indicate support of EHT 320MHz with optional preamble puncture patterns, according to some embodiments. Additionally, this field value of seven can be associated with a format of "EHT (Optional Puncture)" and a bandwidth of 320MHz as illustrated in Figure 12C.

Furthermore, when a static puncture pattern (e.g., a static preamble puncture pattern) is not a continuous puncture and optional preamble puncture patterns are not supported by either ISTA 1202A and/or the RSTA1204A, the ISTA 1202A and RSTA 1204A can perform a fallback procedure to a previous mode or configuration (e.g., 802.11az mode) and use largest available primary channel for ranging NDP, according to some embodiments.

According to some embodiments, when at least one of the ISTA 1202A or the RSTA 1204A do not support any optional preamble puncture pattern, they can still be able to start a ranging session with a mandatory puncture pattern or using a smaller bandwidth (BW) without using preamble puncturing methods or patterns. In other words, although the ISTA 1202A can refrain from starting a ranging session with the RSTA 1204A that uses at least one of the optional preamble puncture patterns, the ISTA 1202A can start a ranging session that uses a mandatory preamble puncture pattern, according to some embodiemnts.

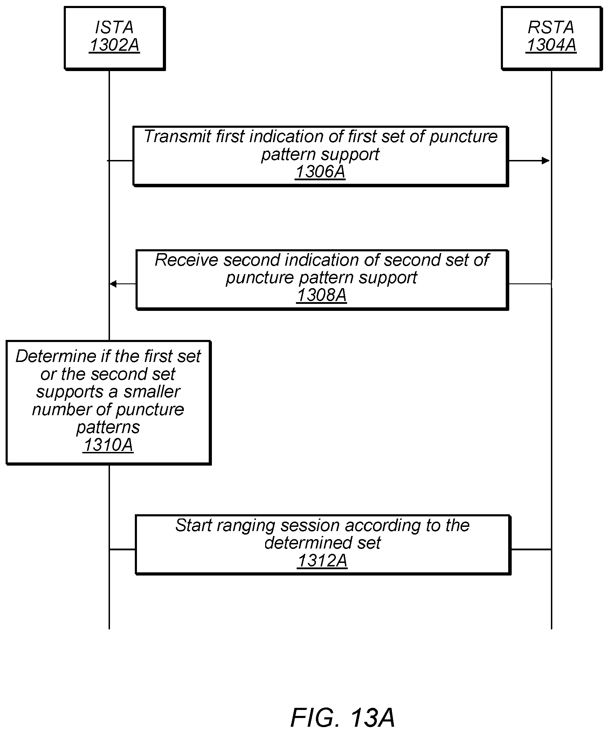

### Figures 13A-E - Method of Starting a Ranging Session for ISTAs and/or RSTAs Supporting Continuous Dynamic Preamble Puncture Patterns or All Optional Preamble Puncture Patterns

Figure 13A is a communication flow diagram illustrating example aspects of a method of starting a ranging session for ISTAs and/or RTSAs supporting continuous dynamic puncture patterns or all optional preamble puncture patterns, according to some embodiments.

Aspects of the method of Figure 13A can be implemented by a first STA (e.g., ISTA) in communication with another STA (e.g., RSTA). The STAs (e.g., ISTA and RSTA) can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA (e.g., ISTA and/or RSTA), UE, non-AP MLD, and/or non-AP STA or other device to perform such method elements.

Note that while at least some elements of the method of Figure 13A are described in a manner relating to the use of communication techniques and/or features associated with IEEE and/or 802.11 (e.g., 802.11bk as one example) specification documents, such description is not intended to be limiting to the disclosure, and aspects of the method of Figure 13A can be used in any suitable wireless communication system, as desired. Similarly, while elements of the method of Figure 13A are described in a manner relating to STAs, such description is not intended to be limiting to the disclosure, and aspects of the method of Figure 13A can be used by STAs that are or are not multi-link devices (MLDs), as desired. Moreover, aspects of the method of Figure 13A can be used by STAs that are APs (e.g., AP or otherwise), as desired. For example, an ISTA can be a non-AP and an RSTA can be an AP, or vice versa, etc. In other words, ISTAs and/or RSTAs can be AP STAs or non-AP STAs.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1306A, the ISTA 1302A can transmit a first indicator of a first set of supported puncture patterns, according to some embodiments. More specifically, in 1306A, the ISTA 1302A (e.g., a first STA) can transmit, to a second STA (e.g., RSTA 1304A), a first indicator indicating that the ISTA 1302A supports a first set of one or more preamble puncture patterns.

In 1308A, the ISTA 1302A can receive, from the RSTA 1304A, a second indicator indicating that the RSTA 1304A supports a second set of the one or more preamble puncture patterns. In some embodiments, at least one of the first indicator or the second indicator can be indicated using two reserved bits of a ranging parameters field format. Additionally or alternatively, the two reserved bits can be combined to indicate that at least one of the ISTA 1302A or the RSTA 1304A does not support any optional preamble puncture patterns, that at least one of the ISTA 1302A or the RSTA 1304A supports only continuous dynamic puncture patterns with bandwidths greater than 160MHz, or that at least one of the ISTA 1302A or the RSTA 1304A supports all optional preamble puncture patterns. In some embodiments, the first and second sets of one or more preamble puncture patterns can be indicated in a puncturing pattern support field in a 320MHz ranging sub-element. For example, a puncturing pattern support field can be set to a value of "1" (e.g., one) to indicate support of all puncturing patterns, according to some embodiments. Alternatively, a puncturing pattern support field can be set to a value of "0" (e.g., zero) to indicate support of only a subset of puncturing patterns defined in a table corresponding to RU or MRU indexes. For example, for a PPDU bandwidth of 320MHz and a 80MHz puncturing scenario, the table can specify puncturing patterns corresponding to RU or MRU indexes such as [x x 1 1 1 1 1 1] for a 3x996-tone MRU 1 or [1 1 1 1 1 1 x x] for a 3x996-tone MRU 4, according to some embodiments. In other words, at least one of the first indicator or the second indicator can be indicated using at least one of a first field value or a second field value of a puncturing pattern support field of a ranging sub-element. For example, at least one of the first field value or the second field value can indicate at least one of the ISTA or the RSTA supporting all optional preamble puncture patterns or the ISTA or the RSTA supporting a subset of all optional preamble puncture patterns, according to some embodiments.

According to some embodiments, the indicated sets (e.g., the first and/or second sets for example) can be predefined and specified in an 802.11 standard. For example, when the first indicator indicates a first set of optional preamble puncture patterns which are continuous dynamic puncture patterns, then the indicated puncture patterns (e.g., the continuous dynamic puncture patterns) define the first set of the optional preamble puncture patterns, according to some embodiments.

In some embodiments, at least one of the first indicator or the second indicator can be indicated using one or two field values in a format and bandwidth subfield of the ranging parameters field format. Additionally or alternatively, a first field value of the one or two field values can indicate support of one or more continuous dynamic puncture patterns associated with bandwidths greater than 160MHz. Furthermore, a second field value of the one or two field values can indicates support of all optional preamble puncture patterns.

In 1310A, the ISTA 1302A can determine whether the first set or the second set supports a smaller number of puncture patterns, according to some embodiments. More specifically, in 1310A, the ISTA 1302A can determine, based on at least one of the first indicator or the second indicator, which of the first and second sets is associated with a smaller number of supported preamble puncture patterns.

In 1312A, the ISTA 1302A can start, based on the determination and in accordance with one of the one or more preamble puncture patterns associated with the smaller number of supported preamble puncture patterns, a ranging session with the RSTA 1304A, according to some embodiments. For example, the ranging session between the RSTA 1304A and ISTA 1302A can be one or more of the ranging sessions described and illustrated in Figures 7-9, according to some embodiments.

According to some embodiments, the ISTA 1302A and RSTA 1304A can support a static puncture pattern in addition to supporting one or more sets of preamble puncture patterns. Furthermore, the at least one processor can be further configured to cause the ISTA 1302A to perform, based on the supported static puncture pattern being non-continuous, a fallback procedure to a legacy mode associated with using a maximum available bandwidth for ranging.

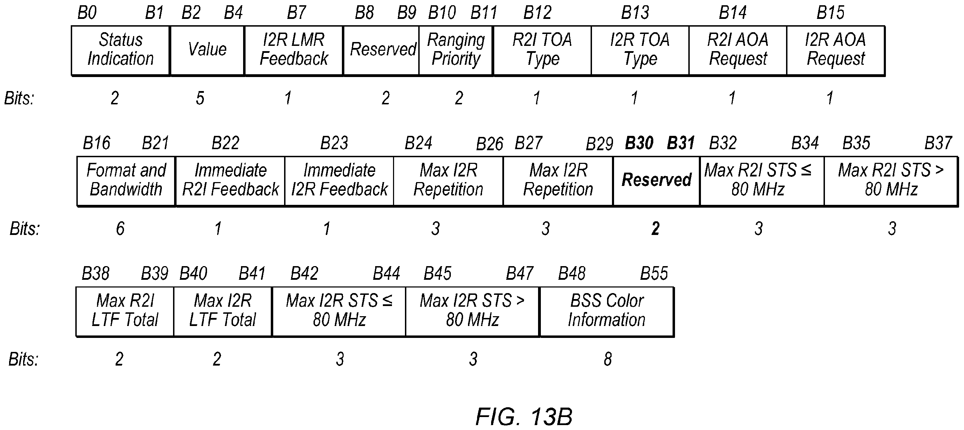

Figure 13B illustrates an example of a Ranging Parameters field as also illustrated by Figure 12B, according to some embodiments. More specifically, Figure 12B highlights using reserved bits B30 and B31 as part of the method described and illustrated by Figure 13A, according to some embodiments.

In some embodiments, it can be possible to indicate two levels of support for optional preamble puncture patterns. For example, as dynamic puncture patterns are likely to be supported in future IEEE 802.11 releases, it can be beneficial to define signaling to indicate support of continuous dynamic puncture patterns with bandwidth greater than 160 MHz (including a primary channel). Additionally, it can be further beneficial to define additional signaling to indicate support of all optional preamble puncture patterns.

Accordingly, ISTAs and RSTAs can indicate two levels of optional preamble puncture patterns. For example, they can indicate that they support only continuous dynamic puncture patterns with bandwidths greater than 160 MHz (including the primary channel) or that they support all optional preamble puncture patterns. In some embodiments, the ISTA 1302A and/or RSTA 1304A can use the two reserved bits of the second reserved field (e.g., B30 and B31) of the ranging parameters field format to indicate these options of support. In other words, the ISTA 1302A and/or RSTA 1304A can define B30 and B31 as optional preamble puncture pattern support subfields.

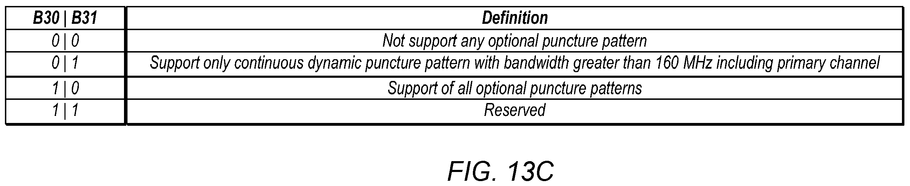

Figure 13C illustrates different combinations of B30 and B31 bit values and example definitions associated with their paired values, according to some embodiments. For example, when both B30 and B31 are associated with values of zero, this can indicate that the ISTA or RSTA does not support any optional preamble puncture pattern. Alternatively, when B30 is associated with a value of zero and B31 is associated with a value of 1, this can indicate that the ISTA/RSTA supports only continuous dynamic puncture patterns with bandwidths greater than 160 MHz (including the primary channel), according to some embodiment. Additionally or alternatively, when B30 is associated with a value of one and B31 is associated with a value of zero, this can indicate that the ISTA/RSTA supports all optional preamble puncture patterns. According to some embodiments, when both B30 and B31 are associated with values of one, this can correspond with a reserved condition or definition (e.g., which can be used at a future time to indicate additional or alternative supported features).

Furthermore and according to some embodiments, when a static puncture pattern is not a continuous puncture, the negotiated set of supported puncture patterns can follow the STA with smaller set of supported puncture patterns. In other words, the ISTA/RSTA can through signaling, configuration, or by default use the lower number of puncture patterns supported by the ISTA and RSTA. For example, when the ISTA indicates support of all optional patterns (e.g., B30 having a value of 1 and B31 having a value of 0) and the RSTA indicates that it only supports optional continuous puncture patterns (e.g., B30 having a value of 0 and B31 having a value of 1), the 802.11bk ranging NDP used by the ISTA and/or RSTA can only use continuous puncture patterns, according to some embodiments. Additionally or alternatively, when any STA (e.g., ISTA or RSTA) indicates that it does not support optional preamble puncture patterns, the ISTA/RSTA can opt to fall back to a previously supported Ranging NDP (e.g., 802.11az mode) with a maximum available bandwidth.

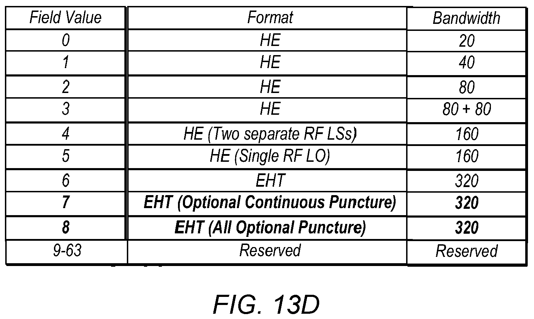

Figure 13D illustrates an example format and bandwidth subfield of a ranging parameters field format (e.g., as illustrated in Figure 12C), according to some embodiments. More specifically, Figure 13D illustrates Field Values and their associated Formats and Bandwidths of the Format and Bandwidth Subfield of the Ranging Parameters field. For example and according to some embodiments, another signaling option can be to use a reserved value in the Format and Bandwidth subfield. More specifically, by using a reserved field value associated with bits B16-B21 (e.g., as illustrated in the ranging parameters field format of Figure 12B) of the Format and Bandwidth field, an ISTA and/or RSTA can be able to indicate that it supports EHT 320MHz with optional continuous puncture patterns or alternatively all optional preamble puncture patterns.

For example and as described above with regard to Figure 12B, the Format and Bandwidth field value 0 can be associated with a high efficiency (HE) format and a bandwidth of 20 MHz, the Format and Bandwidth field value 1 can be associated with a HE format and a bandwidth of 40 MHz, the Format and Bandwidth field value 2 can be associated with a HE format and a bandwidth of 80 MHz, the Format and Bandwidth field value 3 can be associated with a HE format and a bandwidth of 80 + 80 MHz, the Format and Bandwidth field value 4 can be associated with a HE format (and further two separate radio frequency (RF) local oscillators (LOs) and a bandwidth of 160 MHz, the Format and Bandwidth field value 5 can be associated with a HE format (and further a single RF LO) and a bandwidth of 160 MHz, the Format and Bandwidth field value 6 can be associated with a EHT format and a bandwidth of 320 MHz, and the Format and Bandwidth field values of 9-63 can be associated with a reserved format and bandwidth, according to some embodiments.

Additionally and according to some embodiments, a Format and Bandwidth field value "7" can indicate support of only continuous dynamic puncture patterns with bandwidth greater than 160 MHz (including the primary channel). Furthermore, this value of seven can be associated with a Format "EHT (Optional Continuous Puncture)" and a bandwidth of 320MHz. Additionally or alternatively, a Format and Bandwidth field value of "8" can indicate support of all optional preamble puncture patterns, according to some embodiments. Furthermore, this value of eight can be associated with a format such as "EHT (All Optional Puncture" and a 320 MHz bandwidth.

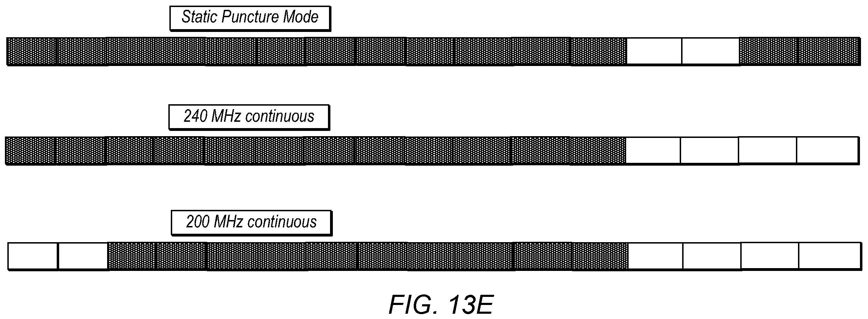

Figure 13E illustrates example puncture patterns for a static puncture mode, a 240MHz continuous puncture mode, and a 200MHz continuous puncture mode. More specifically, Figure 13E illustrates possible puncture patterns based on potential field values of 6, 7 and/or 8 as described with regard to Figure 13D. For example, Figure 13E illustrates a static puncture mode using a static puncture pattern characterized by bit values 0000 0000 0000 1100 (e.g., similar to that as illustrated in Figure 10B).

Accordingly, when an ISTA indicates, via a Format and Bandwidth field value as described by Figure 13D, a field value of 8 (e.g., indicating it supports all optional preamble puncture patterns) and an RSTA indicates, also via a Format and Bandwidth field value as described by Figure 13D, a field value of 7 (e.g., indicating that it supports optional continuous puncture patterns), the optional preamble puncture patterns that are supported by the ISTA and RSTA are shown as the darkened/patterned blocks of Figure 13E.

In some embodiments, when both the ISTA and the RSTA indicate a value of "8" in the Format and Bandwidth subfield, all the optional preamble puncture patterns can be used (e.g., are supported) for the NDP using for ranging measurements. Alternatively, when either the ISTA or the RSTA indicate a value of "6" in the Format and Bandwidth subfield, only the mandatory puncture mode can be used (e.g., the continuous static puncture). Accordingly, when the static puncture pattern is non-continuous, the ISTA/RSTA can fall back to a previously supported mode (e.g., 802.11az mode, as one example).

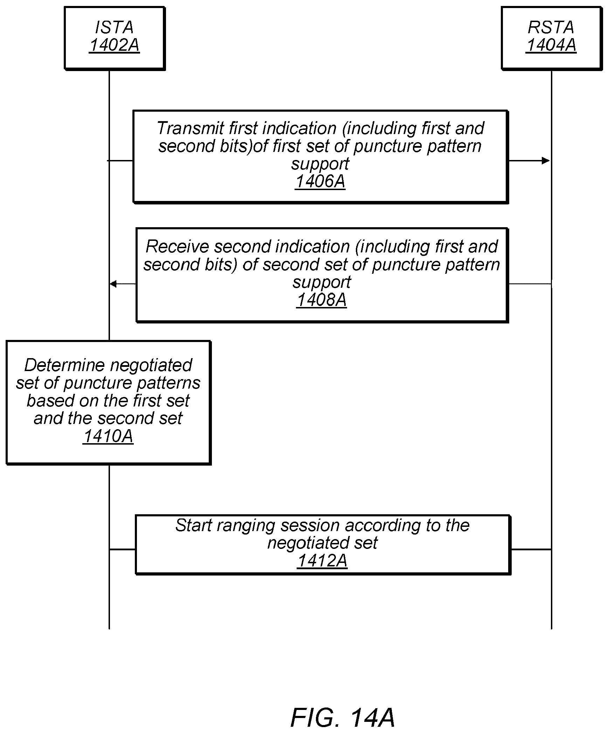

### Figures 14A-C - Method of Starting a Ranging Session for ISTAs/RSTAs Indicating Separate Support of Dynamic and Non-Continuous Preamble Puncture Patterns

Figure 14A is a communication flow diagram illustrating example aspects of a method of starting a ranging session for ISTAs/RSTAs indicating separate support of dynamic and non-continuous puncture patterns, according to some embodiments.

Aspects of the method of Figure 14A can be implemented by a first STA (e.g., ISTA) in communication with another STA (e.g., RSTA). The STAs (e.g., ISTA and RSTA) can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA (e.g., ISTA and/or RSTA), UE, non-AP MLD, and/or non-AP STA or other device to perform such method elements.

Note that while at least some elements of the method of Figure 14A are described in a manner relating to the use of communication techniques and/or features associated with IEEE and/or 802.11 (e.g., 802.11bk as one example) specification documents, such description is not intended to be limiting to the disclosure, and aspects of the method of Figure 14A can be used in any suitable wireless communication system, as desired. Similarly, while elements of the method of Figure 14A are described in a manner relating to STAs, such description is not intended to be limiting to the disclosure, and aspects of the method of Figure 14A can be used by STAs that are or are not multi-link devices (MLDs), as desired. Moreover, aspects of the method of Figure 14A can be used by STAs that are APs (e.g., AP or otherwise), as desired. For example, an ISTA can be a non-AP and an RSTA can be an AP, or vice versa, etc. In other words, ISTAs and/or RSTAs can be AP STAs or non-AP STAs.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In 1406A, the ISTA 1402A can transmit a first indicator indicating support of a first set of puncture patterns, according to some embodiments. More specifically, in 1406A, the ISTA 1402A (e.g., a first STA) can to transmit, to a second STA (e.g., RSTA 1404A), a first indicator indicating that the ISTA 1402A supports a first set of one or more preamble puncture patterns. In some embodiments, the first set of one or more first preamble puncture patterns can be indicated in a puncturing pattern support field in a 320MHz ranging sub-element.

In 1408A, the ISTA 1402A can receive, from RSTA 1404A, a second indicator indicating that RSTA 1404A supports a second set of one or more preamble puncture patterns. Additionally or alternatively, at least one of the first indicator or the second indicator can include a first bit indicating support of dynamic puncture patterns associated with a maximum bandwidth and a second bit indicating support of non-continuous puncture patterns. In some embodiments, the second set of one or more second preamble puncture patterns can be indicated in a puncturing pattern support field in a 320MHz ranging sub-element. For example, a puncturing pattern support field can be set to a value of "1" (e.g., one) to indicate support of all puncturing patterns, according to some embodiments. Alternatively, a puncturing pattern support field can be set to a value of "0" (e.g., zero) to indicate support of only a subset of puncturing patterns defined in a table corresponding to RU or MRU indexes. For example, for a PPDU bandwidth of 320MHz and an 80MHz puncturing scenario, the table can specify puncturing patterns corresponding to RU or MRU indexes such as [x x 1 1 1 1 1 1] for a 3x996-tone MRU 1 or [1 1 1 1 1 1 x x] for a 3x996-tone MRU 4, according to some embodiments. In other words, a first bit and a second bit can be associated with a puncturing pattern support field of a ranging sub-element, according to some embodiments.

In some embodiments, the first bit and the second bit can be reserved bits of a ranging parameters field format. Additionally or alternatively, the processor operably coupled to the radio can be further configured to cause the ISTA 1402A to combine the first bit and the second bit of the first indicator to determine a first capability of the ISTA 1402A and combine the first bit and the second bit of the second indicator to determine a second capability of the RSTA 1404A. In some embodiments, the first bit and second bit can be included in an optional preamble puncture pattern support subfield. For example, the first bit and the second bit can be included in a puncturing pattern support field of a ranging sub-element, according to some embodiments.

In 1410A, the ISTA 1402A can determine a negotiated set of puncture patterns based on the first and second sets supported by the ISTA 1402A and RSTA 1404A, according to some embodiments. More specifically, in 1410A, the ISTA 1402A can determine, based on the first and second indications, a negotiated set of preamble puncture patterns, wherein the negotiated set of preamble puncture patterns includes one or more preamble puncture patterns supported by both the STAs (e.g., ISTA 1402A and RSTA 1404A).

In 1412A, the ISTA 1402A can start a ranging session with the RSTA 1404A, according to some embodiments. More specifically, in 1412A, the ISTA 1402A can start, based on the determination and according to at least one of the one or more preamble puncture patterns of the negotiated set of preamble puncture patterns, at least one of the ranging sessions described and illustrated in Figures 7-9 with RSTA 1404A.

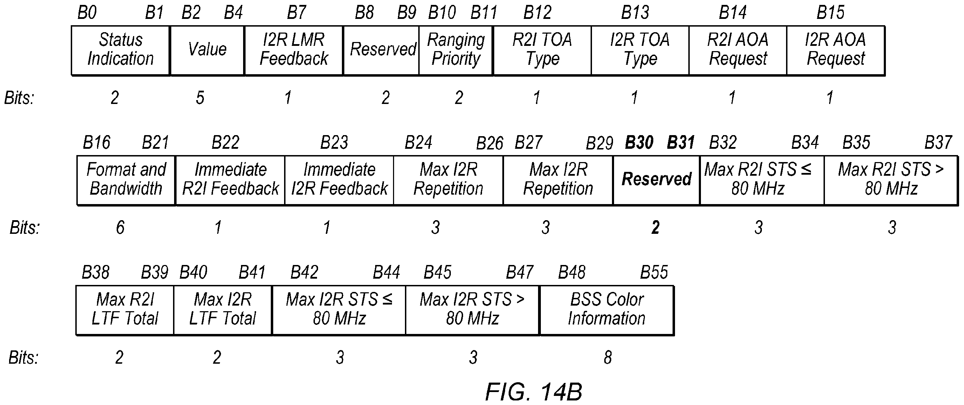

Figure 14B illustrates an example of a Ranging Parameters field as also illustrated by Figure 12B, according to some embodiments. More specifically, Figure 14B highlights using reserved bits B30 and B31 as part of the method described and illustrated by Figure 14A, according to some embodiments.

In some embodiments, it can be possible to independently indicate two types of optional preamble puncture patterns. More specifically, a flexible signaling design can be beneficial for ISTAs and RSTAs to potentially use optional preamble puncture patterns by separately signaling support of dynamic puncture patterns and non-continuous puncture patterns, according to some embodiments. In other words, the ISTA 1402A and RSTA 1404A can be configured to independently indicate support of dynamic puncture patterns with a maximum bandwidth or support of non-continuous puncture patterns.

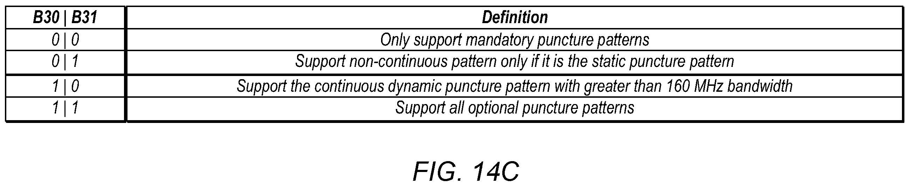

According to some embodiments, the ISTA 1402A and/or RSTA 1404A can use the two reserved bits of the second reserved field (e.g., B30 and B31) of the ranging parameters field format to indicate these options of support. Figure 14C illustrates different combinations of B30 and B31 bit values and example definitions associated with their paired values, according to some embodiments. For example, when both B30 and B31 are associated with values of zero, this can indicate that the ISTA or RSTA only supports mandatory puncture patterns. Alternatively, when B30 is associated with a value of zero and B31 is associated with a value of 1, this can indicate that the ISTA/RSTA supports non-continuous puncture patterns as long as they the static puncture pattern, according to some embodiment. Additionally or alternatively, when B30 is associated with a value of one and B31 is associated with a value of zero, this can indicate that the ISTA/RSTA supports continuous dynamic puncture patterns that are continuous for 160MHz or more. According to some embodiments, when both B30 and B31 are associated with values of one, this can indicate that the ISTA/RSTA supports all optional preamble puncture patterns. In other words, Figure 14C illustrates an example method for combining the two bits (e.g., B30 and B31) to determine the capability of a STA.

In some embodiments, when the static puncture pattern is not a continuous puncture, the negotiated set of supported puncture patterns can be the optional preamble puncture patterns supported by both ISTA 1402A and RSTA 1404A. Additionally or alternatively, when the ISTA 1402A indicates combined (e.g., B30 | B31) values of 0 | 1 and the RSTA 1404A indicates combined values of 1 10, the ISTA/RSTA can fall back to utilizing a ranging NDP of a previously supported mode (e.g., 802.11az mode, as one example) with a maximum available bandwidth.

According to further embodiments, alternative signaling can be used to independently indicate two types of optional preamble puncture patterns. More specifically, a new 802.11bk ranging parameter field can be defined to include the 1 bit or 2 bits optional preamble puncture pattern support subfield in the new field. Additionally or alternatively, the new 802.11bk ranging parameter field can include all potential 802.1 1bk related parameters in the new field, according to some embodiments.

In some embodiments, a method of an initiating station (ISTA) can include transmitting, to a responding station (RSTA), a first indicator indicating whether the ISTA supports one or more optional preamble puncture patterns. Additionally, the method can include receiving, from the RSTA, a second indicator indicating whether the RSTA supports optional preamble puncture patterns. Furthermore and responsive to determining that the ISTA and the RSTA support optional preamble puncture patterns, the method can further include starting, according to at least one of the optional preamble puncture patterns, a ranging session with the RSTA.

In some embodiments, at least one of the first indicator or the second indicator can be indicated using at least one of a first field value or a second field value of a puncturing pattern support field of a ranging sub-element. Furthermore, the puncturing pattern support field of the ranging sub-element can comprise a reserved bit to indicate whether the ISTA supports all optional preamble puncture patterns.

Additionally or alternatively, at least one of the first indicator or the second indicator can be indicated using a field value of a format and bandwidth subfield associated with a ranging parameters field format. According to some embodiments, the format and bandwidth subfield can comprise a reserved field value to indicate whether the ISTA supports extremely high-throughput (EHT) using optional preamble puncture patterns. In some embodiments, the ISTA and the RSTA can also support a static puncture pattern.

In some embodiments, the method can further include receiving, from the RSTA, one or more trigger frames (TFs) transmitting, to the RSTA, one or more ISTA to RSTA (I2R) null data packets (NDPs). Additionally or alternatively, the method can include receiving, from the RSTA, one or more RSTA to ISTA (R2I) ranging null data packet announcement (NDPA) frames and receiving, from the RSTA, one or more R2I NDPs.

According to further embodiments, a processor can be configured to cause an initiating station (ISTA) to transmit, to a responding station (RSTA), a first indicator indicating that the ISTA supports a first set of one or more preamble puncture patterns. Additionally, the processor can be further configured to cause the ISTA to receive, from the RSTA, a second indicator indicating that the second RSTA supports a second set of the one or more preamble puncture patterns. Furthermore, the processor can be further configured to cause the ISTA to, responsive to determining which of the first set and the second set is associated with a smaller number of supported preamble puncture patterns, start, in accordance with one of the one or more preamble puncture patterns associated with the smaller number of supported preamble puncture patterns, a ranging session with the RSTA.

In some embodiments, at least one of the first indicator or the second indicator is indicated using at least one of a first field value or a second field value of a puncturing pattern support field of a ranging sub-element. Additionally or alternatively, at least one of the first field value or the second field value can indicate that at least one of the ISTA or the RSTA supports all optional preamble puncture patterns or at least one of the ISTA or the RSTA supports a subset of all optional preamble puncture patterns.

According to some embodiments, the ISTA and RSTA can support a static puncture pattern in addition to supporting one or more sets of preamble puncture patterns. Furthermore, the at least one processor can be further configured to cause the ISTA to perform, based on the supported static puncture pattern being non-continuous, a fallback procedure to a legacy mode associated with using a maximum available bandwidth for ranging. In some embodiments, the static puncture pattern can have a continuous spectrum.

In some embodiments, at least one of the first indicator or the second indicator can be indicated using one or two field values in a format and bandwidth subfield of a ranging parameters field format. Additionally or alternatively, a first field value of the one or two field values can indicate support of one or more continuous dynamic puncture patterns associated with bandwidths greater than 160MHz. Furthermore, a second field value of the one or two field values can indicate support of all optional preamble puncture patterns.

According to other embodiments, an initiating station (ISTA) can include a radio and a processor operably coupled to the radio and configured to cause the ISTA to transmit, to a responding station (RSTA), a first indicator indicating that the ISTA supports a first set of one or more first preamble puncture patterns. Additionally or alternatively, the processor operably coupled to the radio can be further configured to cause the ISTA to receive, from the RSTA, a second indicator indicating that the RSTA supports a second set of one or more second preamble puncture patterns. Furthermore, at least one of the first indicator or the second indicator can include a first bit indicating support of dynamic puncture patterns associated with a maximum bandwidth and a second bit indicating support of non-continuous puncture patterns. The processor operably coupled to the radio can be further configured to cause the ISTA to, responsive to determining a negotiated set of preamble puncture patterns based on at least one of the first indicator or the second indicator, start, according to at least one of the one or more preamble puncture patterns of the negotiated set of preamble puncture patterns, a ranging session with the RSTA. Furthermore, the negotiated set of preamble puncture patterns can include one or more preamble puncture patterns supported by both the ISTA and RSTA

In some embodiments, the first bit and the second bit are associated with a puncturing pattern support field of a ranging sub-element. Additionally or alternatively, the processor operably coupled to the radio can be further configured to cause the I STA to combine the first bit and the second bit of the first indicator to determine a first capability of ISTA and combine the first bit and the second bit of the second indicator to determine a second capability of the RSTA. In some embodiments, the first bit and second bit can be included in an optional preamble puncture pattern support subfield.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, when executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by an initiating station (ISTA):
transmitting, to a responding station (RSTA), a first indicator indicating whether the ISTA supports one or more optional preamble puncture patterns;
receiving, from the RSTA, a second indicator indicating whether the RSTA supports one or more optional preamble puncture patterns; and
responsive to determining that the ISTA and the RSTA support one or more optional preamble puncture patterns, starting, according to at least one of the one or more optional preamble puncture patterns, a ranging session with the RSTA.

2. The method of claim 1, wherein at least one of the first indicator or the second indicator is indicated using at least one of a first field value or a second field value of a puncturing pattern support field of a ranging sub-element.

3. The method of claim 2, wherein the puncturing pattern support field of the ranging sub-element comprises a reserved bit to indicate whether the ISTA supports all optional preamble puncture patterns.

4. The method of any of claims 1-3, wherein at least one of the first indicator or the second indicator is indicated using a field value of a format and bandwidth subfield associated with a ranging parameters field format.

5. The method of claim 4, wherein the format and bandwidth subfield comprises a reserved field value to indicate whether the ISTA supports extremely high-throughput (EHT) using optional preamble puncture patterns.

6. The method of any of claims 1-5, wherein the ISTA and the RSTA also support a static puncture pattern.

7. The method of any of claims 1-6, further comprising:
receiving, from the RSTA, one or more trigger frames (TFs); and
transmitting, to the RSTA, one or more ISTA to RSTA (I2R) null data packets (NDPs).

8. The method of claim 7, further comprising:
receiving, from the RSTA, one or more RSTA to ISTA (R2I) ranging null data packet announcement (NDPA) frames; and
receiving, from the RSTA, one or more R2I NDPs.

9. A processor configured to cause an initiating station (ISTA) to:
transmit, to a responding station (RSTA), a first indicator indicating that the ISTA supports a first set of one or more preamble puncture patterns;
receive, from the RSTA, a second indicator indicating that the RSTA supports a second set of the one or more preamble puncture patterns; and
responsive to determining which of the first set and the second set is associated with a smaller number of supported preamble puncture patterns, start, in accordance with one of the one or more preamble puncture patterns associated with the smaller number of supported preamble puncture patterns, a ranging session with the RSTA.

10. The processor of claim 9, wherein at least one of the first indicator or the second indicator is indicated using at least one of a first field value or a second field value of a puncturing pattern support field of a ranging sub-element.

11. The processor of claim 10, wherein at least one of the first field value or the second field value indicates:
at least one of the ISTA or the RSTA supporting all optional preamble puncture patterns; or
at least one of the ISTA or the RSTA supporting a subset of all optional preamble puncture patterns.

12. The processor of any of claims 9-11, wherein at least one of the first indicator or the second indicator is indicated using one or two field values of a format and bandwidth subfield associated with a ranging parameters field format.

13. The processor of claim 12, wherein a first field value of the one or two field values indicates support of one or more continuous dynamic puncture patterns associated with bandwidths greater than 160MHz.

14. The processor of any of claims 12-13, wherein a second field value of the one or two field values indicates support of all optional preamble puncture patterns.

15. An initiating station (ISTA), comprising:
a radio; and
a processor operably coupled to the radio and configured to cause the ISTA to perform the method of any of claims 1-8.
